Europäisches Patentamt

European Patent Office

Office européen des brevets

(11) Veröffentlichungsnummer: **0 300 340**
**A1**

(12) **EUROPÄISCHE PATENTANMELDUNG**

(21) Anmeldenummer: **88111178.5**

(22) Anmeldetag: **13.07.88**

(51) Int. Cl.4: **A61G 5/00**

(30) Priorität: **22.07.87 DE 3724242**

(43) Veröffentlichungstag der Anmeldung:
**25.01.89 Patentblatt 89/04**

(84) Benannte Vertragsstaaten:
**AT BE CH DE ES FR GB GR IT LI LU NL SE**

(71) Anmelder: **Laude, Detlef Gerhard**
**Hauptstrasse 67**
**D-2804 Lilienthal(DE)**

(72) Erfinder: **Laude, Detlef Gerhard**
**Hauptstrasse 67**
**D-2804 Lilienthal(DE)**

(74) Vertreter: **Bruse, Willy Hans Heinrich**
**Edisonstrasse 14**
**D-2800 Bremen 33(DE)**

(54) **Fahrzeug zur Beförderung behinderter Personen.**

(57) Das Fahrzeug zur Beförderung behinderter Personen ist aus einem selbständig fahrstabilen Rollstuhl (1) und aus einem Fahrradantriebsteil (2) mit einem Sitz (4) für eine weitere Person zusammengesetzt, wobei der Rollstuhl (1) und das Antriebsteil (2) um eine vertikal ausgerichtete Achse (19) gegeneinander schwenkbar sind. Die Verbindung des Rollstuhls (1) mit dem Antriebsteil (2) weist neben der vertikalen Achse (19) eine horizontale Schwenkachse (20) auf, wobei der Rollstuhl (1) mit dem Antriebsteil (2) in einer Schwenkstellung um diese horizontale Achse (20) verriegelbar ist, in der der Rollstuhl (1) sich nur auf den Rädern (23) einer Achse (21) abstützt.

Fig. 1

EP 0 300 340 A1

## Fahrzeug zur Beförderung behinderter Personen

Die Erfindung betrifft ein Fahrzeug zur Beförderung behinderter Personen mit Merkmalen nach dem Oberbegriff des Patentanspruches 1.

Ein solches Fahrzeug ist aus der DE-OS 33 03 218 bekannt. Der Fahrradantriebsteil entspricht dabei im wesentlichen der Konstruktion eines Fahrrades mit dem Hinterrad, ist somit einspurig und weist einen Tretkurbelantrieb auf, so daß auf diesem Antriebsteil eine zweite Person Platz nehmen und in dem Rollstuhl eine behinderte Person befördern kann. Die Verbindung des Antriebsteils mit dem Rollstuhl ist um eine vertikal ausgerichtete Achse gelenkig, so daß der Rollstuhl das Vorderrad und den Lenker des Fahrradantriebsteiles ersetzt. Bei einem solchen Fahrzeug muß der Antriebsteil vor seiner Verbindung mit dem Rollstuhl so weit angehoben werden, daß er in einem bestimmten Winkel zum Rollstuhl steht und in dieser Position durch ein Verbindungselement mit dem Rollstuhl verbunden werden kann. Danach wird der Antriebsteil nach unten gedrückt, so daß das Antriebsrad den Boden berührt. Dadurch wird der Rollstuhl soweit nach hinten gekippt, daß die Räder auf der vorderen Rollstuhlachse eine ausreichende Bodenfreiheit haben.

Aus dem DE-GM 85 22 016 ist ein einräderiges Antriebsteil bekannt, welches mittels eines Längsträgers und einer Traverse an einen Rollstuhl kuppelbar ist, wobei der Längsträger und die Traverse durch das Verbindungsgelenk miteinander verbunden sind.

Faltbare Rollstühle können in Verbindung mit Antriebsteilen nach dem Stande der Technik keine Verwendung finden, worin ein besonderer Mangel zu sehen ist, denn vielfach führen behinderte Personen ihren Rollstuhl ständig mit sich oder es stehen, z.B. in Behindertenhorts, nur wenig Antriebseinheiten für eine Vielzahl von Rollstuhlbenutzern zur Verfügung.

Die Aufgabe der Erfindung besteht darin, ein Fahrzeug aus einem Fahrradantriebsteil und einem Rollstuhl für die Beförderung behinderter Personen in der Weise weiter auszubilden, daß die Fahrposition des Gefährts eingestellt werden kann, wenn sowohl die Person im Rollstuhl als auch die Person auf dem Antriebsteil ihren Platz eingenommen hat und eine Unabhängigkeit von der Bauart sowie von der Stabilität des Rollstuhles erreicht wird.

Zur Lösung dieser Aufgabe wird nach der Erfindung eine Ausbildung des Fahrzeugs mit Merkmalen nach dem Kennzeichen des Patentanspruches 1 vorgeschlagen.

Diese Merkmale ermöglichen, daß die Person im Rollstuhl Platz nehmen kann, wenn dieser stabil auf allen seinen Rädern abgestützt ist. Erst wenn die Person im Rollstuhl Platz genommen hat, kann der Rollstuhl von der auf das hintere Antriebsteil gestiegenen Person ein wenig nach hinten in eine Schräglage gekippt werden, in der die Räder der vorderen Rollstuhlachse vom Erdboden abgehoben sind. In dieser Kipplage erfolgt eine stabile Verriegelung mit dem Antriebsteil. Entsprechend umgekehrt kann diese Verriegelung nach Beendigung der Fahrt wieder gelöst und der Rollstuhl somit in seine selbständig fahrstabile Stützlage zurückgeführt werden, in der alle Räder des Rollstuhles Bodenkontakt aufweisen, um der behinderten Person den gefahrlosen Ausstieg aus dem Rollstuhl zu gestatten.

Dies wird nach einem Gedanken zur weiteren Ausgestaltung der Erfindung durch einen in der Seitenansicht winkelförmigen Rahmen erreicht, der den Rollstuhl von hinten untergreift und mit diesem fest verbindbar ist. Der winkelförmige Rahmen ist um die horizontale Schwenkachse beweglich mit dem Antriebsteil verbindbar und mit diesem Antriebsteil in einer Lage verriegelbar, in der sich der Rollstuhl nur mit Rädern auf einer Fahrachse abstützt. Zur konstruktiven Gestaltung dieses Gedankens sind am Rahmen Kupplungsglieder befestigt, die mit korrespondierenden Kupplungsgliedern zusammenwirken, welche an dem Antriebsteil befestigbar und um die vertikal ausgerichtete Lenkachse schwenkbar sind. Vorteilhaft bestehen diese Kupplungsglieder aus einem querverlaufend am Rahmen befestigten Zapfen sowie einem um eine parallel dazu liegende Achse schwenkbaren Riegel und aus einer Gabel sowie einer Aufnahmevorrichtung für den Riegel am Antriebsteil, so daß das Antriebsteil und der Rahmen mit dem Rollstuhl jederzeit leicht voneinander getrennt, jedoch auch Kippbewegungen des Rollstuhles bei gelöster Verriegelung durchgeführt werden können.

Die korrespondierenden Teile dieser Kupplungsmittel sind vorteilhaft mit einem sich vertikal erstreckenden Zapfen ausgebildet, der nach Art und Größe geeignet ist, in das Rohrteil für die Aufnahme des Lenkerrohres eines normalen Fahrradrahmens eingesetzt zu werden. Dadurch ist es möglich, jedes beliebige Fahrrad nach dem Entfernen des Lenkers mit dem Vorderrad als Antriebseinheit für einen Rollstuhl zu benutzen.

Schließlich sieht eine vorteilhafte Weiterbildung des Erfindungsgedankens vor, daß der Rahmen in der Größe auf den Rollstuhl einstellbar ausgebildet ist und daß Mittel zur Verbindung mit dem Rollstuhl vorgesehen sind. Vorteilhaft ist die Verwendung eines Rahmens aus teleskopisch in der Länge verstellbaren Profilrohren, so daß der Rahmen an unterschiedliche Rollstuhlgrößen angepaßt werden kann. Eine andere Besonderheit der Erfindung ist darin zu sehen, daß die Verwendung des Rahmens eine nach oben gerichtete Verlängerung ermöglicht, an der eine Kopfstütze für die Person im Rollstuhl angebracht werden kann, die aber auch Handgriffe für die auf dem Antriebsteil sitzende Person trägt, um dieser Person in angenehmer Sitzhaltung eine Stütze zu geben und die Lenkung des Fahrzeugs mit Hilfe des Rollstuhles zu ermöglichen.

Auf der Zeichnung ist ein Ausführungsbeispiel der Erfindung schematisch dargestellt. Es zeigen:

Figur 1 eine Seitenansicht des Fahrzeuges zur Beförderung behinderter Personen,

Figur 2 eine Draufsicht auf den Rahmen zur Aufnahme des Rollstuhles und

Figur 3 eine vergrößerte Darstellung der Kupplungsglieder in Seitenansicht mit teilweisem Schnitt.

Das Fahrzeug zur Beförderung behinderter Personen ist aus einem Rollstuhl 1 beliebiger Bauart und aus einem Fahrradantriebsteil 2 mit einem Tretkurbelantrieb 3 und einem Sattel 4 für eine zweite Person zusammengesetzt. Im Falle des Beispieles ist schematisch ein zusammenfaltbarer Rollstuhl 1 dargestellt. Für die Verbindung dieses Rollstuhles 1 mit dem Antriebsteil 2 ist ein in der Seitenansicht winkelförmig gestalteter Rahmen 5, vorteilhaft aus Profilrohren, dargestellt, welcher an verschiedenen Stellen schellenartige Befestigungsmittel 6 für die Verbindung mit dem Rahmen des Rollstuhles 1 aufweist, so daß der Rollstuhl an mehreren Stellen sicher auf dem Rahmen 5 abgestützt und mit diesem verbindbar ist. Am Ende einer oberen Verlängerung des in der Seitenansicht winkelförmigen Rahmens 5 ist ein Querträger 7 angeordnet, der mittig eine Kopfstütze 8 für die in dem Rollstuhl sitzende Person aufweist, und an dessen Enden Griffe 9 für die auf dem Sattel 4 des Antriebsteiles 2 sitzende Person vorgesehen sind.

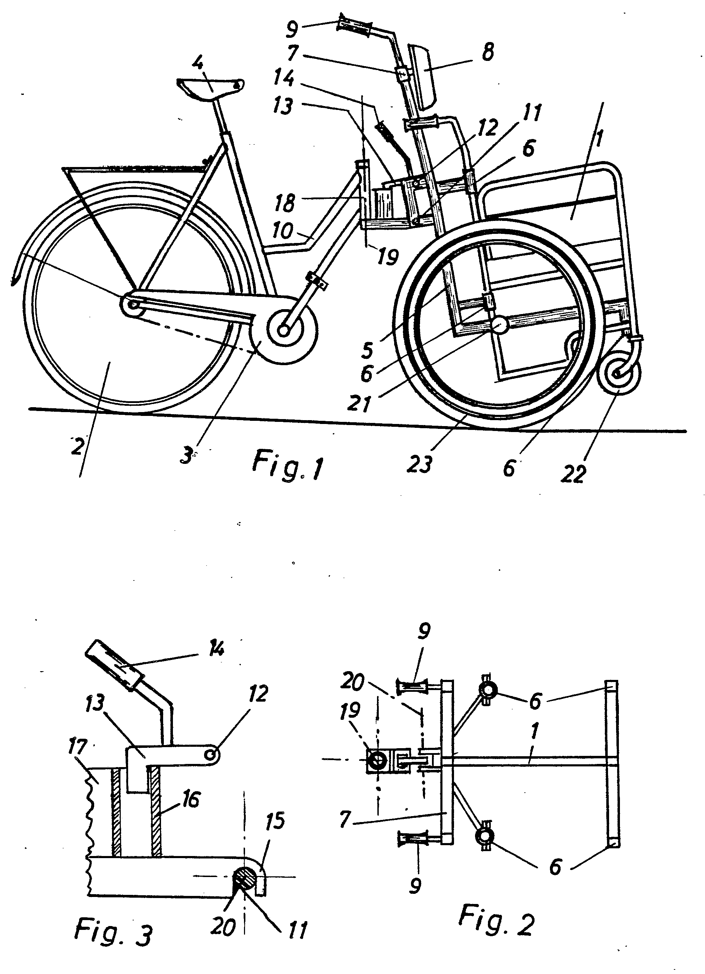

In der Figur 2 wurde die Kopfstütze 8 zur Erzielung einer besseren Übersicht nicht gezeichnet. Die Kupplungsglieder für die Verbindung des Rahmens 5 mit dem Rahmen 10 eines herkömmlichen Fahrrades oder dergleichen bestehen einerseits aus einem am Rahmen 5 etwa horizontal verlaufend befestigten Zapfen 11 sowie einem um eine parallel dazu verlaufende Achse 12 schwenkbaren Riegel 13 mit einem Handgriff 14, welcher zur besseren Betätigung des Riegels 13 dient, und andererseits aus einem auf den Zapfen 11 aufhängbaren Gabelteil 15 sowie einer Aufnahme 16 für den Riegel 13, die beide an einem Verbindungsstück 17 angeordnet sind, welches mit einem auf der Zeichnung nicht dargestellten, sich etwa vertikal erstreckenden Zapfen von unten in das vertikale Rohrteil 18 am Fahrradrahmen 10 angreift, in welchem normalerweise bei einem Fahrrad das Lenkerrohr gelagert ist. Die Achse dieses Zapfens und des Rohrteiles 18 bilden die vertikale Achse 19 zur Lenkung des Fahrzeuges, während die Achse 20 des Zapfens 11 die Kippachse für die Verschwenkung des Rollstuhles 1 gegenüber der Antriebseinheit 2 um die hintere Rollstuhlachse 21 bildet. Durch Entriegelung des Riegels 13 und der Aufnahme 16 schwenkt der Rollstuhl in die stabile selbständige Fahrlage zurück, in der die vorher vom abgehobenen vorderen Räder 22 des Rollstuhles 1 den Boden berühren. In der gezeichneten Lage stützt sich der Rollstuhl 1 mit den hinteren Rädern 23 auf der Achse 21 auf dem Boden ab. Ersichtlich ist aus der zeichnerischen Darstellung in Figur 1 der relativ große mögliche Lenkeinschlag der Räder 23 des Rollstuhles 1 gegenüber dem Rahmen 10 des Antriebsteiles 2, so daß das Fahrzeug relativ enge Kurven durchfahren kann. Die Anwendung der erfindungsgemäßen Ausbildungsmerkmale ist nicht auf ein Antriebsteil mit einem Tretkurbelantrieb entsprechend der zeichnerischen Darstellung beschränkt, sondern kann auch bei einem fahrradähnlichen Antriebsteil mit motorischem Antrieb erfolgen.

## Ansprüche

1. Fahrzeug zur Beförderung behinderter Personen, welches aus einem Rollstuhl und einem Fahrradantriebsteil mit einem Sitz für eine weitere Person mittels eines Verbindungsgelenkes mit einer vertikalen Lenkachse in einer Fahrposition zusammensetzbar ist, in der der Rollstuhl sich nur mit den Rädern der hinteren Rollstuhlachse abstützt, dadurch gekennzeichnet, daß die Verbindung des Rollstuhls (1) mit dem Antriebsteil (2) ein weiteres Gelenk mit einer horizontalen Gelenkachse (20) und einen durch die auf dem Antriebsteil (2) sitzende Person von Hand beweglichen Riegel (13) aufweist, durch den die Bewegung des Gelenks um die horizontale Gelenkachse (20) in der Fahrposition verriegelbar ist.

2. Fahrzeug für behinderte Personen nach Anspruch 1, gekennzeichnet durch einen in der Seitenansicht winkelförmigen, den Rollstuhl untergreifenden und mit diesem fest verbindbaren Rahmen (5), der um die horizontale Gelenkachse (20) beweglich mit dem Antriebsteil (2) verbunden und mit diesem durch den Riegel (13) verbindbar ist.

3. Fahrzeug nach den Ansprüchen 1 und 2, dadurch gekennzeichnet, daß der Rahmen (5) in der Größe einstellbar ausgebildet ist.

4. Fahrzeug nach den Ansprüchen 1 bis 3, dadurch gekennzeichnet, daß der Rahmen (5) aus teleskopisch in der Länge verstellbaren Profilrohren aufgebaut ist.

5. Fahrzeug nach den Ansprüchen 1 bis 4, dadurch gekennzeichnet, daß für die Person auf dem Antriebsteil (2) Handgriffe (9) nach Art eines Fahrradlenkers an einer nach oben gerichteten Verlängerung des Rahmens (5) angeordnet und in der Höhe einstellbar sind.

6. Fahrzeug nach den Ansprüchen 1 bis ˙5, dadurch gekennzeichnet, daß am Rahmen (5) oberhalb des Rollstuhls (1) eine Kopfstütze (8) für die Person im Rollstuhl (1) vorgesehen ist.

7. Fahrzeug nach den Ansprüchen 1 bis 6, dadurch gekennzeichnet, daß der Rahmen (5) mehrere Stützlager (6) für den Rollstuhl aufweist und zur Aufnahme eines faltbaren Rollstuhls geeignet ist.

8. Fahrzeug nach den Ansprüchen 1 bis 7, dadurch gekennzeichnet, daß an einem Verbindungsstück des Rahmens (5) ein sich vertikal erstreckender Zapfen vorgesehen ist, auf den der Rahmen (10) eines üblichen Fahrrades mit dem Rohrteil (18) für das Lenkerrohr aufgehängt ist.

EP 0 300 340 A1

Fig. 1

Fig. 3

Fig. 2

Europäisches
Patentamt

**EUROPÄISCHER RECHERCHENBERICHT**

Nummer der Anmeldung

| Kategorie | EINSCHLÄGIGE DOKUMENTE | EP 88111178.5 | |
|---|---|---|---|
| | Kennzeichnung des Dokuments mit Angabe, soweit erforderlich, der maßgeblichen Teile | Betrifft Anspruch | KLASSIFIKATION DER ANMELDUNG (Int. Cl.4) |
| A | GB - A - 482 082 (ZELIOLI) -- | | A 61 G 5/00 |
| D,A | DE - A1 - 3 303 218 (MESSERSCHMIDT) ---- | | |

|  |
|---|
| RECHERCHIERTE SACHGEBIETE (Int. Cl.4) |
| A 61 G 5/00 |
| B 62 K 5/00 |
| B 62 M 1/00 |

Der vorliegende Recherchenbericht wurde für alle Patentansprüche erstellt.

| Recherchenort | Abschlußdatum der Recherche | Prüfer |
|---|---|---|
| WIEN | 27-10-1988 | SCHMIDT |